# EUROPEAN PATENT APPLICATION

(11) **EP 3 333 747 A1**
(43) Date of publication of application: **13.06.2018**
(21) Application number: 16202414.5
(22) Date of filing: 06.12.2016
(51) Int. Cl.: G06F 21/57, G06F 21/64

(54) **METHODS AND SYSTEMS FOR DETECTING ROLLBACK ATTACKS**

(71) Applicant: ETH Zurich, 8092 Zurich (CH)
(72) Inventor: CAPKUN, Srdjan, 8049 Zürich (CH); DHAR, Aritra, 8038 Zürich (CH); MATETIC, Sinisa, 8046 Zürich (CH); KOSTIAINEN, Kari, 8053 Zürich (CH); SOMMER, David, 4143 Dornach (CH)

(57) **Abstract**

According to the present invention there is provided a method for determining if a rollback attack has occurred, the method comprising the steps of, receiving at a target master enclave, an encrypted data state from an operating system, wherein the encrypted data state includes a counter value; decrypting the data state and extracting the counter value from the decrypted data state; sending, from each of a plurality of assisting master enclaves to the target master enclave, a counter value for the target master enclave, which that respective assisting master enclave has stored in its memory; out of the counter values which the plurality of assisting master enclaves sent, identifying the largest counter value; comparing the largest counter value with the counter value which the target master enclave extracted from the decrypted data state; determining that a rollback attack has occurred if the compared counter values are not equal. There is further provided a corresponding system.

## Description

### Field of the invention

The present invention concerns methods and systems which can be used to detect a rollback attack.

### Description of related art

Intel Software Guard Extensions (SGX) enables execution of security-critical application code, called enclaves, in isolation from the untrusted system software. Protections in the processor ensure that a malicious OS cannot read or modify enclave memory at runtime. To protect enclave data across executions, SGX provides a security mechanism called sealing that allows each enclave to encrypt and authenticate data for persistent storage. SGX-enabled processors are equipped with certified cryptographic keys that can issue remotely verifiable attestation statements on the software configuration of enclaves. Through these security mechanisms (isolation, sealing, attestation) SGX enables development of various applications and online services with hardened security.

While sealing prevents a malicious OS from reading or arbitrarily modifying persistently stored enclave data, rollback attacks remain a threat. In a rollback attack a malicious OS replaces the latest sealed data with an older encrypted and authenticated version. Enclaves cannot detect replay, because the processor is unable to maintain persistent state across enclave executions that may include platform reboots. All persistent storage on the platform, such as the disk, is controlled by the untrusted OS.

The SGX architecture consists of new instructions, protective mechanisms in the processor, and new processor-specific cryptographic keys. The main goal of the architecture is to protect application/level code from any untrusted system software, such as a compromised OS. The SGX architecture isolates security-critical application execution, but also gives rise to a new adversary, one that can terminate, restart and schedule enclave execution.

An enclave is created by the OS. During enclave creation, the OS specifies the enclave code. Security mechanisms in the processors create a data structure called an SGX Enclave Control Structure (SECS) that is stored in a protected memory area (see below). Because enclaves are created by the OS, their code cannot contain sensitive data. The start of the enclave is recorded, reflecting the content of the enclave code as well as the loading procedure (sequence of instructions). The recording of an enclave start is called measurement and it can be used for later attestation. Once an enclave is no longer needed, the OS can terminate it and erase its memory structure from the protected memory.

The SGX security architecture guarantees that software inside an enclave (both code and data) is isolated from all software running outside of the enclave, including the OS, other enclaves, and peripherals. The isolation is achieved via protection mechanisms that are enforced by the processor. The code and data of an enclave are stored in a protected memory area called Enclave Page Cache (EPC) that resides in Processor Reserved Memory (PRM). PRM is a subset of DRAM that cannot be accessed by the OS, applications or direct memory accesses. The PRM protection is based on a series of memory access checks in the processor. Non-enclave software is only allowed to access memory regions outside the PRM range, while enclave code can access both non-PRM memory and the EPC pages owned by the enclave.

The untrusted OS can evict EPC pages into the untrusted DRAM and load these back at a later stage. While the evicted EPC pages are stored in the untrusted memory, SGX assures their confidentiality, integrity and freshness via cryptographic protections. The architecture includes the Memory Encryption Engine (MEE) which is a part of the processor's uncore (microprocessor function close but not integrated to the core). The MEE encrypts and authenticates the enclave data that is evicted to the non-protected memory, and ensures enclave data freshness at runtime using counters and a Merkle-tree structure. The root of the tree structure is stored on the processor die. Additionally, MEE is used to protect SGX's Enclave Page Cache against physical attacks and is connected to the Memory Controller. Attestation and provisioning. Attestation is the process of authenticating that a particular piece of enclave code has been properly instantiated. An enclave can perform attestation to another enclave on the same platform (local attestation) or to a remote verifier on a separate platform (remote attestation). Remote attestations are performed by a specific system component called Quoting Enclave that uses a processor-specific certified key to issue a signed statement about the enclave measurement. Once an enclave has been authenticated using attestation, an external entity (e.g., a service provider) or another enclave can establish a secure channel to it using an authenticated key exchange.

Enclaves can save confidential data across executions. Sealing is the process to encrypt and authenticate enclave data for persistent storage. Typically enclaves perform sealing when their state has changed in such a way that the new state should be recoverable on the next execution of the enclave (possibly after reboot). All local persistent storage, such as the disk, is controlled by the untrusted OS. For each enclave, the SGX architecture provides a sealing key that is private to the executing platform and the enclave. The sealing key is derived from a so called Fuse Key (unique to the platform, not known to Intel) and an Identity Key that can be either the Enclave Identity or Signing Identity. The Enclave Identity is a cryptographic hash of the enclave measurement and uniquely identifies the enclave. If data is sealed with Enclave Identity, it is only available to this particular enclave version. The Signing Identity is provided by an authority that signs the enclave prior to its distribution. Data sealed with Signing Identity can be shared among all enclave versions that have been signed with the same Signing Identity.

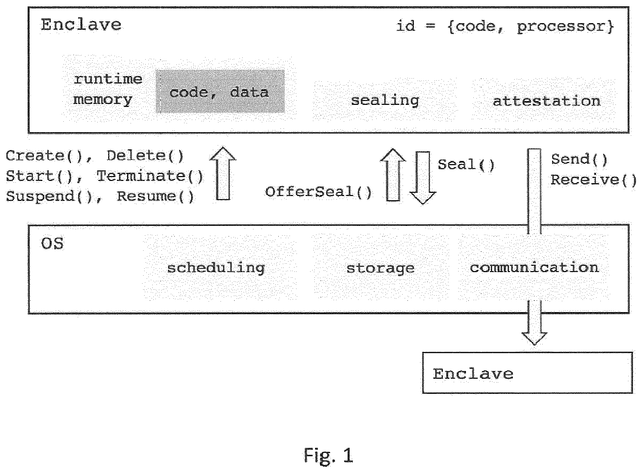

Fig. 1 is an SGX model showing an enclave and OS, their main functionality, and the operations (scheduling, storage, communication) through which they interact.

Enclave execution is scheduled by the OS:
- *id* ← *Create(code):* The OS can create an enclave by providing its code as an input. The SGX architecture creates a unique identifier that is defined by the processor on which it runs (i.e., the public part of the processor-specific attestation key) and by its code: id ← {code, processor}.
- *output* ← *Sart(id, input):* The OS can start a created enclave using its identifier and input data. The enclave executes the code that was assigned to it during creation. While an enclave is running, the OS and other enclaves are isolated from its runtime memory.
- *Suspend(id) and Resume(id):* The OS can suspend the execution of an enclave. When an enclave is suspended, its program counter and runtime memory retain their values. The OS can resume suspended enclave execution.
- *Terminate(id):* The OS can terminate enclave execution. At termination, the enclave runtime memory is erased by the SGX architecture.
- *Delete(id):* Finally, the OS can delete an enclave. Once an enclave is deleted, the enclave identifier can no longer be used.

A second set of operations shown in Fig 1 related to sealing data for local persistent storage:
- *seal* ← *Seal(data):* An enclave can encrypt and authenticate data for local persistent storage. This operation creates a data structure that is passed to the OS.
- *OfferSeal(id, seal):* The OS can offer sealed data. The enclave can verify that it previously created the seal, but the enclave cannot distinguish which seal is the latest.

Enclaves can communicate with other enclaves using attestation. The attestation mechanism allows an enclave to authenticate its identity and bind application-specific data to it. A recipient of a message that contains an attestation signature, can verify the code of the sending enclave and the processor where it is running (both components of the enclave identity). All sent and received messages are mediated by the OS, i.e., the enclaves cannot communicate directly between each other. The following operations may be used for communication:
- *Send(msg):* An enclave can send source-authenticated messages to other enclaves. The recipient of the message can be on the same or on another platform.
- *id, msg* ← *Receive():* An enclave can receive source- authenticated messages. The operation returns the sender *id* that defines the enclave code and processor. We do not model platform reboots, as those have the same effect as enclave restarts. Our model assumes that each enclave identity has its own runtime memory that is perfectly isolated from the untrusted OS and other enclaves. In reality, enclave code and data are processed in shared processor caches.

An adversary who controls all system software on the target platform, including the OS, can schedule enclaves (create, start, suspend, resume, terminate, delete). The adversary can offer the latest and previous versions of sealed data, and block, delay, read and modify all messages sent by the enclaves. Such an adversary can violate the integrity of sealed enclave data with a simple rollback attack: After an enclave has sealed at least two data elements *s1* ← *Seal(d1)* and *s2* ← *Seal(d2),* the adversary may initiate the enclave to perform *Terminate()* and *Sart()* operations to erase the runtime memory of the enclave. When the enclave requests for the latest sealed data d2, the adversary performs *OfferSeal(id, s1)* operation and the enclave accepts d1 as d2 (i.e the enclaves accepts the older data d1 rather than the latest data d2). In other words the rollback attack reverts the enclave back to a previous state and not to it latest state.

Rollback attacks can have severe implications, especially for enclaves that operate on financial or medical data. First, consider a stand-alone medical application that protects patient data using an enclave. Enclave data or state integrity violation via a rollback attacks can cause patient misdiagnosis, which has been shown to be a common cause for incorrect treatment and even patient deaths. Consider, for example, a medical web application running on the cloud. The application uses enclaves to store and process patient data that physicians access remotely. Remote attestation and signing can provide data authentication, but if a compromised OS replays an old version of the sealed data, the integrity of patient data is violated. Such attacks can cause severe threats to patient health, even loss of human lives.

Second, consider a distributed financial application, such as a pre-defined set of enclaves that maintain a private (permissioned) blockchain. When new transactions are added to the blockchain, the enclaves run a byzantine fault tolerant agreement protocol to ensure that all enclaves have the same view of the transactions and their order. However, if the adversary performs a rollback attack on sufficiently many enclaves, the state of the distributed application is reverted, and the append-only property of the blockchain is broken. Such an attack can result in significant loss of money. Consider a blockchain system where every time a new transaction is added to the system the enclaves that maintain the blockchain run an agreement protocol. If the agreement protocol is successful, the SGX enclaves add the new transaction to the blockchain and seal the latest state of the blockchain on the local disk. The next time the blockchain is accessed and the enclave is started, a malicious OS replays an old version of the sealed data (rollback attack). Such attack would allow the adversary to spends the same money multiple times in a digital currency system. The adversary could add one transaction that indicates transfer of money in return of purchased product. Then the adversary could roll back the blockchain to its previous state, and use the same money again, as many times as he wants.

It is an aim of the present invention to obviate or mitigate the above-mentioned disadvantages with existing solutions. In particular it is an aim of the present invention to provide improved security against rollback attacks.

### Brief summary of the invention

According to the invention, these aims are achieved by means of a method for determining if a rollback attack has occurred, the method comprising the steps of, receiving at a target master enclave, an encrypted data state from an operating system, wherein the encrypted data state includes a counter value; decrypting the received encrypted data state and extracting the counter value from the decrypted data state; sending, from each of a plurality of assisting master enclaves to the target master enclave, a counter value for the target master enclave, which that respective assisting master enclave has stored in its memory; out of the counter values which the plurality of assisting master enclaves sent, identifying the largest counter value; comparing the largest counter value with the counter value which the target master enclave extracted from the decrypted data state; determining that a rollback attack has occurred if the compared counter values are not equal.

The present invention realizes rollback protection as a distributed system among a plurality of enclaves belonging to a respective plurality of platforms (preferably SGX platforms) running of different processors. The plurality of platforms form a protection group, which are to assist each other in distributed rollback protection. When a target enclave seals data, it distributes its counter value to assisting enclaves of the other platforms in the protection group; and each of the assisting enclaves store the counter value locally. Later, when the target enclave reads the sealed data from its local persistent storage, it obtains the counter values from assisting enclaves to verify that the sealed data is of the latest version. Advantageously, an adversary cannot rollback individually any enclave of the protection group members to their respective previous states.

It should be understood that the platforms can belong to a single administrative domain or the platforms could be owned by private individuals who all benefit from collaborative rollback protection.

Furthermore, the present invention has no single point of failure and requires no setup of new computing infrastructure. Additionally, present invention enables frequent state updates and data migration.

The method may comprise, sending from each of a plurality of assisting master enclaves to the target master enclave, a group counter table which contains counter values for all of said master enclaves, which that respective assisting master enclave has stored in its memory.

The method may further comprise at the target ME recovering a group counter table by, generating a template group counter table which is to be populated with the counter values of said plurality of assisting master enclaves; and for each assisting master enclave, comparing the counter values for that assisting master enclave which are provided in the group counter tables of all the responses, and identifying that largest counter value for that assisting master enclave, and entering into its template group counter table that largest counter value for that assisting master enclave.

The method may further comprise the steps of, receiving at an application specific enclave, an encrypted data state from an operating system; decrypted the encrypted data state to provide a decrypted data state, and determining a hash which is a value representative of the decrypted data state; sending from the target master enclave to the application specific enclave a hash which that application specific enclave last sent to the master enclave; comparing the hash which represents the decrypted data state with the hash which the target master enclave sent to the application specific enclave; determining that a rollback attack has occurred if the compared hashes are not equal. It should be understood that these particular steps alone may define a further alternative method for determining if a rollback attack has occurred, according to a further aspect of the present invention. Thus, according to a further aspect of the present invention there is provided a method for determining if a rollback attack has occurred, the method comprising the steps of, receiving at an application specific enclave, an encrypted data state from an operating system; decrypted the encrypted data state to provide a decrypted data state; determining a hash which is a value representative of decrypted data state; sending from the target master enclave to the application specific enclave a hash which that application specific enclave last sent to the master enclave; comparing the hash which represents the decrypted data state with the hash which the target master enclave sent to the application specific enclave; determining that a rollback attack has occurred if the compared hashes are not equal.

The method may comprise the steps of, updating the data state of a target master enclave which is running on a processor; incrementing the value of a counter in the runtime memory or the target master enclave in response to updating the data state; sending the value of the counter to a plurality of assisting master enclaves, each of the assisting master enclaves running on different processors; at each of the assisting master enclaves which receive the value of the counter which was sent by the target master enclave, storing said value of the counter in a memory of the respective assisting master enclave, and sending an echo to said target master enclave after said assisting master enclave has stored the value of the counter in said memory, wherein the echo includes the value of the counter which that assisting master enclave stored in said memory, and wherein the echo has a signature of said assisting master enclave; if said target master enclave receives above a predefined threshold number (q) of the signed echoes, then generating a list of the received signed echoes; sending the list to the assisting master enclaves; at each of the assisting master enclaves which receive the list, identifying in the list the echo which is signed by that assisting master enclave, and comparing the value of the counter which is said identified echoes with the value of the counter stored said memory of said assisting master enclave, and sending an acknowledgement to the target master enclave if the compared values match; if the target master receives a predefined threshold number (q) of acknowledgments then storing the updating the data state and counter value in persistent storage.

The step of updating the data state of a target master enclave which is running on a processor, may comprise updating a local state hash table to include a new hash for an application specific enclave, wherein the new hash is a value which is representative of an updated data state of an application specific enclave; and wherein the method further comprises the step of sending a message from the target master enclave to the application specific enclave, if the target master enclave receives a predefined threshold number (q) of acknowledgments; and storing the data state of the application specific enclave in persistent storage in response to receiving said message at the application specific enclave.

The data state of the application specific enclave may comprise application specific data, and wherein the method may comprise the steps of, adjusting the application specific data so as provide the application specific enclave with an updated data state; and calculating the new hash which is representative of an updated data state of an application specific enclave.

The application specific data may comprise a blockchain, and wherein the step of adjusting the application specific data so as provide the application specific enclave with an updated data state comprises updating adding a new transaction to blockchain.

The predefined threshold number (q) may be q = ((n+1+f)/2), wherein n+1 is the total number of master enclaves, and f is the maximum number of compromised platforms which are to be tolerated.

The predefined threshold number (q) may be q = u+f+1 wherein f is the maximum number of compromised platforms which are to be tolerated, denoted as f, and u is the maximum number of platforms that might be unavailable.

The method may further comprise the steps of, at the target master enclave attesting each of the assisting master enclaves, and then establishing a respective symmetric key (k_{MEi}) for each of the assisting master enclaves which is used to encrypt communication between the target master enclave and that respective assisting master enclave.

The method may further comprise the steps of, at an application specific enclave attesting the target master enclave, and then establishing a shared key (k_{ASEi}) which is used to encrypt communication between the target master enclave and that application specific enclave.

Preferably the target master enclave and each of the plurality of assisting master enclaves are run on different respective platforms, and wherein each of the respective platforms are run on a different respective processor.

According to a further aspect of the present invention there is provided a system which can be used to perform the method according to any one of the above-mentioned methods, the system comprising, a plurality of platforms which run on different, respective, processors; and a persistent storage for each respective platform; each of the plurality of platforms comprising, a master enclave and a plurality of application specific enclaves, and an operating system, wherein the operating system provides a communication interface between the master enclave and the persistent storage and provides a communication interface between the application specific enclaves and the persistent storage; wherein the persistent storage for a respective platform comprises the last data state which the master enclave of that platform sent to the operating system for storage in the persistent storage, wherein said data state includes a counter value for a counter in the master enclave; and wherein the master enclave of each respective platform comprises a group counter table which contains counter values for the counters of all of the other master enclaves on the other platforms, which is received from the respective other master enclaves.

The persistent storage for a respective platform may further comprise the last data state which an application specific enclave sent to the operating system for storage in the persistent storage; and wherein the master enclave of that respective platform further comprises a hash for said application specific enclave, wherein said hash was sent to it by said application specific enclave, wherein the hash is a value which represents a data state of said application specific enclave.

According to a further aspect of the present invention there is provided a tangible data carrier comprising program code arranged for causing a processor to carry out any one of the above-mentioned methods when said processor executes said program code.

It should be understood that the present invention could be used in any suitable setting. For example, the present invention could be used in a distributed system where multiple enclaves run the same application (e.g., state machine replication). Because each enclave runs the same distributed application, they all have an incentive to assist each other in rollback protection. The present invention could also be used in a shared computing resource such as a cloud platform. The computing resource consists of multiple platforms that belong under the same administrative domain (e.g., could platform provider), and thus the platforms have an incentive to participate in collaborative rollback protection. The application specific enclaves may originate from different third-party developers. The present invention could also be used in deployment where the participating platforms are owned by private individuals and run independent application specific enclaves. Each user benefits from rollback protection for their own enclaves, and is therefore willing to provide resources for assisting other user's collaborative system.

### Brief Description of the Drawings

The invention will be better understood with the aid of the description of an embodiment given by way of example and illustrated by the figures, in which:
Fig. 1 shows a view of an SGX model;
Fig. 2 shows a system according to an embodiment of the present invention;
Fig. 3 provides an illustration of the memory present in a ASE and ME of a platform in the system of Fig. 2, along with persistent storage available to that platform via the OS;
Fig. 4 is a flow chart illustrating the steps taken, in an embodiment of the present invention, when an ASE seals a data state which is in its runtime memory, to its persistent storage;
Fig. 5 is a flow chart illustrating the steps taken, in an embodiment of the present invention, for an ASE recovers its data state after restart.
Fig. 6 is a flow chart illustrating the steps taken, in an embodiment of the present invention, when an ME is started for the first time or is restarted.

### Detailed Description of possible embodiments of the Invention

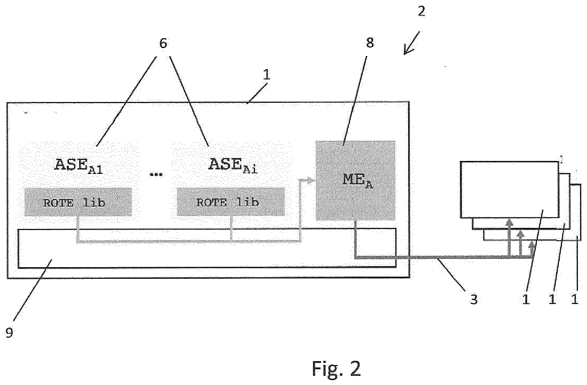

Figure 2 shows a system according to an embodiment of the present invention. The system comprises a plurality of platforms 1 (for clarity only one of the platforms is shown in detail); in this example the system comprises a total of n+1 platforms. In this example each platform 1 is an SGX platform. The n+1 platforms define a group 2 of platforms 1 which are to assist each other in providing rollback protection (i.e., for every platform 1 there are 'n' other assisting platforms). Each platform 1 is connected with every other platform in the group over a network 3, so that each platform 1 can communicate with every other platform 1 over the network 3. Importantly, in this example, each platform 1 of the group 2 runs on a different processor, and each processor has its own respective persistent storage (non-volatile memory).

Each platform 1 runs a plurality of user-applications, and each user-application has a corresponding Application Specific Enclave (ASE_{A1}-ASE_{Ai}) 6. Each platform 1 further comprises a respective Master Enclave (ME) 8. The ME 8 can communicate with each of the ASE 6 on the corresponding platform 1. Additionally each ME 8 of a platform 1 can communicate with every other ME 8 of the other platforms 1 in the group 2 over the network 3.

Each platform 1 further comprises an operating system (OS) 9; the ME 8 of a platform 1 and the each of the plurality of ASEs 6 on the platform 1 can communicate with the OS 9 on the corresponding platform 1. Furthermore, communication between each of the plurality of ASEs 6 and the ME 8 on a corresponding platform 1 can take place via the OS 9. The OS enables communication between the ME and the persistent storage of the processor, and the OS further enables communication between the each ASE and the persistent storage of the processor.

It should be understood that the n+1 platforms of the group can be selected from a network of platforms using any suitable means. In this example the n+1 platforms of the group were selected from a network of platforms by a trusted offline entity. Such group establishment is practical, for example, in scenarios where all n+1 platforms belong to a single administrative domain (e.g., multiple servers in the same data center). We refer to the trusted offline entity that selected the n+1 platforms 1 as the group owner. It should be understood that the group owner may select a platform 1 to be a member of the group 2 using any suitable protocol; in this embodiment in order to select a platform 1 to be a member of the group 2 the group owner issues a certificate which contains a list of public parts of their SGX attestation keys. Such certificate can be verified by the ME on each selected platform, for example, by hard-coding the public key of the group owner to the ME implementation.

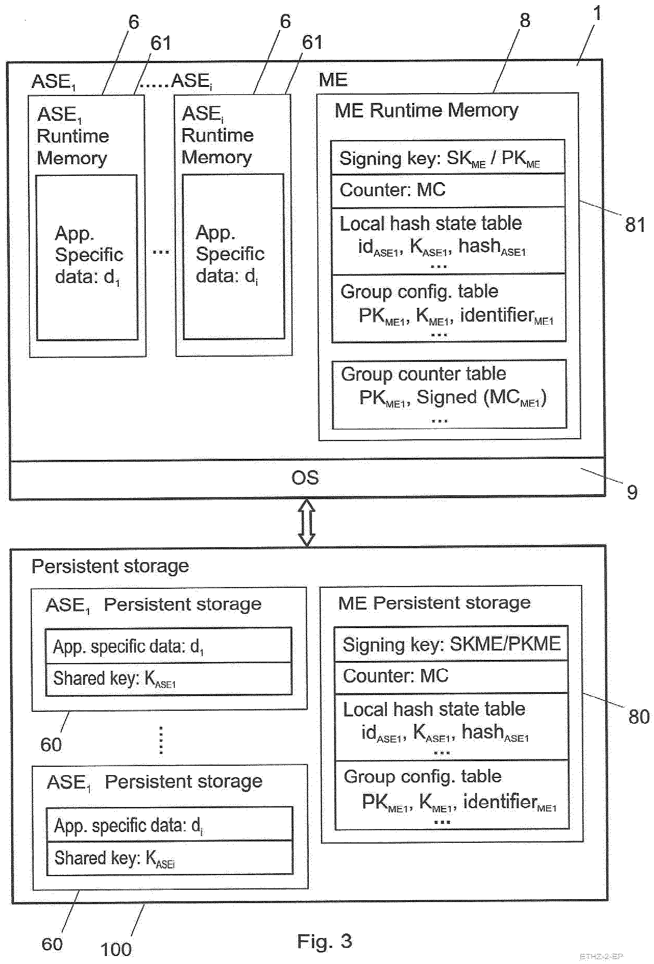

Figure 3 provides an illustration of the memory present in an ASE 6 and ME 8 of a platform 1 in the system 2, along with persistent storage 100 available to that platform 1 via the OS 9. As mentioned each platform 1 comprises a plurality of ASEs 6, an ME 8, and an OS 9. Referring to Figure 3, each ASE comprises a runtime memory (volatile memory) 61; the ME of each platform 1 also comprises a runtime memory (volatile memory) 81.

Each platform 1 can communication with persistent storage 100 provided on the corresponding processor. The persistent storage is non-volatile memory. The persistent storage 100 may take any suitable configuration, for example the persistent storage may be a disk or a hard-drive. A portion of the persistent storage 100 is allocated to the ME 8. The portion of the persistent storage which is allocated to the ME will be referred to hereafter as the ME persistent storage 80. Respective portions of the persistent storage 100 will be allocated to the respective ASE's. Each of the respective portions of the persistent storage which are allocated to a respective ASE will be referred to hereafter as an ASE persistent storage 60.

The OS 9 provides a communication interface between the ME 8 and the persistent storage 100 and between the ASEs 6 and the persistent storage 100. The ME 8 can send data which is in its runtime memory 81 to the OS 9, for storage in the ME persistent storage 80; the OS 9 will pass the data it receives from the ME 8 to the ME persistent storage 80 where it is stored. Each ASE can send data which is in its runtime memory to the OS 9 for storage in the ASE persistent storage 60; the OS 9 will pass the data it receives from the ASE 6 to the ASE persistent storage 60 where it is stored. Importantly the ME and ASE will always encrypt the data they send to the OS 9, thus the data which is stored in the persistent storage 100 is encrypted. For example, the data which is stored in the ME persistent storage 80 will have been encrypted by the ME which sent that data; data which is stored in the ASE persistent storage 60 will have been encrypted by the ASE which sent that data. Additionally, the OS 9 can retrieve data which is stored in the ME persistent storage 80 and send the retrieved data to the ME 8, and/or can retrieve data which is stored in the persistent storage 60 and send the retrieved data to the ASE.

In the ASE runtime memory 61 there is stored Application Specific Data and a shared key (k_{ASE*i*}). The shared key (k_{ASE*i*}) is used to encrypt and decrypt communication between the ASE 6 and the ME 8 (i.e. symmetric key algorithm). The shared key (k_{ASE*i*}) for each respective ASE 6 running on the corresponding platform 1, is known to the ME 8 running on said platform 1. Thus, the shared key (k_{ASE*i*}) is known to the ASE and ME, when the ASE 6 sends a communication to the ME, the ASE will encrypt that communication using the shared key (k_{ASE*i*}), upon receiving the communication the ME 8 will decrypt the communication using the shared key (k_{ASE*i*}); likewise when the ME 8 wishes to send a communication (e.g. data) to the ASE 6, the ME 8 will first encrypt that communication (e.g. encrypt the data) using the shared key (k_{ASE*i*}), upon receiving the communication (e.g. encrypted data) the ASE 6 will decrypt the communication using the shared key (k_{ASE*i*}). The ASE persistent storage 60 will contain the latest Application Specific Data and shared key (k_{ASE*i*}) which that ASE last sent to the OS 9 for storage in the ASE persistent storage 61.

The Application Specific Data which is present in the runtime memory 61 may be identical to the Application Specific Data in the ASE persistent storage 60; or the Application Specific Data which is present in the runtime memory 61 may differ to the Application Specific Data in the ASE persistent storage 60. For example, Application Specific Data initially provided in the runtime memory may be identical to the Application Specific Data in the ASE persistent storage 60, however the Application Specific Date in the runtime memory 61 may then be updated/changed so that it differs to the Application Specific Data in the ASE persistent storage 60. Subsequently the updated Application Specific Data in the runtime memory 61 may be stored in the persistent storage 60 (i.e. the updated Application Specific Data is 'sealed') thereby overwriting the Application Specific Data which way previously stored in the persistent storage 61.

Importantly, the 'data state' of an ASE is defined by the Application Specific Data (i.e. the content of the Application Specific Data) and the shared key (k_{ASE*i*}) which is in the runtime memory 61 of the ASE. When an ASE 'accepts' a data state then that ASE encrypts the data state and sends that encrypted data stateto the OS which stores the encrypted data state in the ASE persistent storage 60 (i.e. the Application Specific Data and shared key (k_{ASE*i*}) which is currently in the runtime memory 61 is encrypted by the ASE and stored by the OS in the ASE persistent storage 60). For example when an ASE 'accepts' an updated data state then the ASE encrypts the updated data state and sends that encrypted updated data state to the OS which stores that encrypted updated data state in the ASE persistent storage 60 (i.e. the Application Specific Data which was initially in the runtime memory 60 has been updated/changed to provide updated Application Specific Data in the runtime memory 61;and this updated Application Specific Data, along with the shared key (k_{ASE*i*}), which are in the runtime memory 61 of the ASE, are encrypted by the ASE and then stored in the ASE persistent storage 60). The process of encrypting a data stated plus storing that encrypted data state in a persistent storage is referred to as 'sealing'.

In one particular embodiment the Application Specific Data is a Blockchain. A blockchain is a ledger of transactions (such as bitcoin transactions). When a new transaction takes place then this new transaction is added to the blockchain. The addition of the new transaction results in an update to the blockchain which is in the runtime memory of the ASE (i.e. an updated data state); if the ASE subsequently accepts this new transaction as being a valid transaction then it will accept the updated blockchain and will send the updated blockchain to the OS which will store the updated blockchair in the ASE persistent storage 60 so as to overwrite the blockchain which was previously stored in the ASE persistent storage 60 (i.e. the updated blockchain is 'sealed').

Furthermore, each ASE can calculate a hash. The hash is a value which is representative of the data state of that ASE (i.e. is representative of the application specific data and the shared key (k_{ASE*i*}), which is currently in the runtime memory 61 of the ASE). The calculated hash can be communicated by the ASE 6 to the ME 8 in the corresponding platform 1. As mentioned above, the shared key (k_{ASE*i*}) is used to encrypt and decrypt communication between the ASE and the ME, thus the hash is encrypted by the ASE using the shared key (k_{ASE*i*}) before sending it to the ME 8, and the ME decrypts the encrypted hast which it receives the shared key (k_{ASE*i*}) and retrieves the hash which the ASE sent.

In the runtime memory 81 of the ME 8 there is stored a local hash state table, which contains entry for each of the plurality of ASEs 6 on the corresponding platform 1; each respective entry in the local hash state table contains a locally unique identifier (id_{ASEi}) for the ASE, the shared key (k_{ASE*i*}) which it uses to decrypt communication sent by that ASE to the ME and to encrypt communication sent by the ME to the ASE, and a hash which is representative of the latest data state which that ASE had stored in the ASE persistent storage 60 (i.e. which is representative of the latest Application Specific Data and shared key (k_{ASE*i*}) which that ASE 6 sent to the OS for storage in the ASE persistent storage 60).

Most preferably there will be a different shared key (k_{ASE*i*}) for each respective ASEs on the platform 1; for example, there will be a first shared key (k_{ASE*1*}) which is used to encrypt and decrypt communication between the ME and a first ASE, and a second shared key (k_{ASE2}), which is different to the first shared key, which is used to encrypt and decrypt communication between the ME and a second ASE. Preferably a key establishment protocol is run between the ME 8 and each of the respective ASEs 6 on the corresponding platform 1 so that a respective shared key (k_{ASE*i*}) is established for each of the respective ASE 6 of the platform 1. During a key establishment protocol with an ASE 6, the ASE 6 performs an attestation of the ME 8 on the corresponding platform 1. The code measurement of the ME 8 can be hard-coded to the ASE implementation or provisioned by the ASE developer. Once the ASE 6 has authenticated the ME 8, it can run a key establishment protocol with the ME 8 to establish a shared key (Kₐₛₑᵢ). The ME 8 adds the established shared key (k_{ASE*i*}) to the local hash state table together with a locally unique identifier id_{ASEi} which identifies the ASE. The ASE adds the same shared key (k_{ASE*i*}) to its own runtime memory 61 and then the data state of the ASE is sealed; in other words the ASE adds the same shared key (k_{ASE*i*}) to its runtime memory 61, then the ASE encrypts its data state and sends the encrypted data state to the OS which stores the encrypted data state in the ASE persistent storage 60. The shared key (k_{ASE*i*}) is subsequently used to encrypt and authenticate any communication (e.g. data such as hashes) between the ASE and the ME.

A group configuration table is also stored in the runtime memory 81 of the ME 8. The group configuration table is created by the ME during the 'ME initialization procedure' when the ME is started for the first time. As mentioned the ME 8 can communicate with the MEs 8 of the other platforms 1 in the group 2 over the network 3; the communication between two ME's is encrypted using symmetric cryptography, whereby communication between two ME's is encrypted using a symmetric key (k_{ME*i*}), which is known to each of the two MEs. Most preferably each pair of MEs in the group use a different symmetric key (k_{ME*i*}) to encrypt communication. The ME which is sending communication (e.g. data, such as a counter value MC) can encrypt that communication using the symmetric key (k_{ME*i*}), and because the symmetric key (k_{ME*i*}) is also known by the receiving ME the receiving ME can decrypt the encrypted communication it receives using the symmetric key (k_{ME*i*}). The group configuration table of an ME 8 contains an entry for each of the other 'n' MEs (belong to the respective 'n' other platforms 1 in the group 2); each respective entry in the group configuration table comprises a public key (PK_{ME}) for that ME, and the symmetric key (k_{ME*i*}) which that ME uses to encrypt communication sent to that ME. Accordingly when the ME 8 receives communication from another ME 8 then the ME 8 which receives the communication retrieves from its group configuration table the symmetric key (k_{ME*i*}) for that ME which sent the communication, and uses the retrieved symmetric key (k_{ME*i*}) to decrypt the communication. In one embodiment the ME which receives the encrypted communication may simply try to decrypt the communication with the symmetric key (k_{ME*i*}) in its group configuration table until it reaches the symmetric key (k_{ME*i*}) which successfully decrypts the communication. In another embodiment the ME which receives a communication first identifies which ME 8 in the group which sent the communication, and then after said ME 8 has been identified the ME which received the communication then retrieves from its group configuration table the symmetric key (k_{ME*i*}) for that ME which sent the communication, and uses the retrieved symmetric key (k_{ME*i*}) to decrypt the communication. The ME 8 which received the communication may identify which ME 8 in the group which sent the communication, by, for example checking from which IP address the communication was sent.

It should be understood that in the present invention an ME may preferably add nonces and end point identifiers to any communication/message which it sends to another ME in the group 2, so as to prevent message replay. Adding nonces and end point identifiers is a know technique used in the field to prevent message reply. Preferably an ME adds to each communication/message which it sends, two things: nonce, which is a random number that is created by the sender in order to prevent a malicious platform in the group 2 for replaying some old messages. So if each message has a unique nonce every time, an adversary cannot use an old message and sent it pretending to be a part of the new protocol execution; and second, end point identifiers which identify where is the message coming from and for whom is it intended for, more specifically, the ID of the sender and the receiver.

The group configuration table of the ME 8 is generated during an 'ME initialization procedure'. The 'ME initialization procedure', is carried out by an ME when the ME is started for the first time. During the 'ME initialization procedure' the ME creates an asymmetric key pair consisting of a SK_{ME}/PK_{ME} consisting of a secret key (SK_{ME}) and public key (PK_{ME}). The ME 8 determines the platforms 1 that belong to the group 2 and performs attestation on all of the 'n' other MEs 8 in the group 2. The ME 8 uses the communication operation *id, data* ← *Receive()* to obtain public keys of the other 'n' MEs in the group 2. The operation returns two elements: First, *id* specifies the measurement of the sender ME code and the processor attestation key. Second, *data* contains the public part of asymmetric key of another ME PK_{MEi}. The ME verifies that the code measurement matches to its own code and that the processor-specific attestation key belongs to the protection group. If both of these conditions hold, the ME saves the received public key (PK_{MEi}) to group configuration table. Once MEs have mutually attested each other, they can use the *Send()* and *Receive()* operations to run an authenticated key agreement protocol to establish the symmetric key (k_{ME*i*}). The ME adds this symmetric key (k_{ME*i*}) to a group configuration table. As discussed above the 'ME initialization procedure' further comprises the step of the ME creating a group configuration table; additionally, as will be discussed later, the 'ME initialization procedure' will further comprise the step of the ME creating a counter (preferably a monotonic counter), and the step of the ME creating a group counter table. Preferably after the steps of the 'ME initialization procedure' have been completed the ME will encrypt its data state and send the encrypted data state to the OS 9 which will stored the encrypted data state in the ME persistent memory 81.

Also stored in the runtime memory 81 of the ME 8 are the asymmetric key pair SK_{ME}/PK_{ME}. A secret key (SK_{ME}) may be used by the ME to sign updates made to the content of its own runtime memory before sending that update to the 'n' other MEs in the group 2 (for example the secret key (SK_{ME}) is used to sign the monotonic counter value which the ME sends to other MEs in the group 2). The secret key (SK_{ME}) is known only to the ME (it is not known by the 'n' other MEs in the group 2). The public key (PK_{ME}) is the asymmetric pair for the secret key (SK_{ME}) and is used as an identifier of the ME and also to achieve verification. Verification is achieved when the public key is used to verify that a holder of the paired secret key (SK_{ME}) sent a message: An ME can sign a message with its secret key (SK_{ME}) to create a signature on the message; any of the other MEs in the group which receive the message and which have the corresponding public key (PK_{ME}) for the ME which sent the message, can combine the received message, the signature on it, with the public key (PK_{ME}) to verify whether the signature was valid (i.e. to verify if the signature was made by the owner of the paired secret key (SK_{ME})). Changing the message, even replacing a single letter, will cause verification to fail: in a secure signature system, it is computationally infeasible for any ME that does not know the private key to deduce it from the public key or from any number of signatures, or to find a valid signature on any message for which a signature has not hitherto been seen. Thus the authenticity of a message can be demonstrated by the signature, provided the owner (the ME which sent the message) of the secret key (SK_{ME}) keeps its private key secret. It should be understood that the MEs in the group 2 send their respective public key (PK_{ME}) to all of the other MEs in the group so that each ME in the group can verify messages/data which they receive.

Thus in the preferred embodiment of this invention the invention respective symmetric keys (k_{ME*i*}) (al subscripts "ME" should be capitalized...there are many of them, e.g. bellow this, 5 instances...) are used to encrypt and decrypt communication between the MEs in the group (i.e. symmetric cryptography); and the asymmetric key pairs SK_{ME}/PK_{ME} consisting of the secret key (SK_{ME}) and public key (PK_{ME}) are used for verification of communication, and also during in the 'ME initialization procedure' to allow for the establishment of the symmetric key (k_{ME*i*}).

The runtime memory 81 of the ME 8 further comprises a counter which has a value MC. Preferably the counter is a monotonic counter. The counter is created during the 'ME initialization procedure' carried out when the ME is started for the first time; thus the 'ME initialization procedure' further comprises the step of the ME creating a counter. Preferably when the counter is first created it preferably has an initial value of zero.

The value of the counter is incremented each time the data state of the ME is updated. For example, when the ME receives a new hash from an ASE, then that new hash is entered in the local hash state table to overwrite the hash which is currently in the local hash state table for that ASE, then the data state of the ME has been updated (i.e. changed); as a result the ME will increment the counter value (MC).

Importantly, the 'data state' of an ME 8 is defined by the counter value (MC) on the counter, the content of the local hash state table, the asymmetric signing key pair SK_{ME}/PK_{ME}, and the content of the group configuration table, which are in the runtime memory 81 of the ME. When an ME 'accepts' a data state then the ME 8 encrypts its data state and sends the encrypted data state to the OS for storage in the ME persistent storage 81 (i.e. the ME 8 encrypts the counter value (MC) on the counter, the content of the local hash state table, the asymmetric signing key pair SK_{ME}/PK_{ME}, and the content of the group configuration table, which are currently in the runtime memory 81, and sends that encrypted counter value (MC), content of the local hash state table, asymmetric signing key pair SK_{ME}/PK_{ME}, and content of the group configuration table, to the OS which stores the encrypted data state in the ME persistent storage 80). For example, the counter value in the runtime memory 81 of the ME 8 may be incremented to provide an updated data state; when an ME 'accepts' this updated data state then the ME encrypts that data state and sends that encrypted data state to the OS which stores that updated data state in the persistent storage 80. The updated data state will overwrite the data state which was previously stored in the ME persistent storage 80. The process or encrypting a data state plus storing the encrypted data state in a persistent storage is referred to as 'sealing'.

The runtime memory 81 of the ME 8 further comprises a group counter table. The group counter table contains an entry for each of the other 'n' MEs (belong to the respective 'n' other platforms 1 in the group 2); each respective entry in the group counter table comprises the public key (PK_{ME}) for a respective one of the 'n' other MEs, which the ME uses to as an respective identifier for that respective other ME, and which the ME also uses for verification (i.e. when the ME receives encrypted data, the public key is used by the ME to verify that said respective other ME, which is the holder of the paired secret key (SK_{ME}) sent that encrypted data).

The group counter table is also created during the 'ME initialization procedure' which is carried out when the ME is started for the first time; thus the 'ME initialization procedure' further comprises the step of the ME creating a group counter table. Initially when the group counter table is created it will be empty, however it will become populated with the respective entries for each of the other 'n' ME as the data state of these 'n' other ME are updated.

Importantly, since the 'data state' of an ME 8 is defined by the counter value (MC) on the counter, the content of the local hash state table, the asymmetric key pair SK_{ME}/PK_{ME}, and the content of the group configuration table, which are in the runtime memory 81 of the ME, a change in the content of the group counter table does not result in the a change of the data state of the ME 8.

Thus the ASE persistent storage 60 will store respective data states for each of the respective ASEs. Each respective ASE will have previously sent their data state to the OS to be stored in the ASE persistent storage 60. The ME persistent storage 80 will store respective data states for the ME. The ME 8 will have previously sent its data state to the OS to be stored in the ME persistent storage 80.

### ASE State Update Protocol

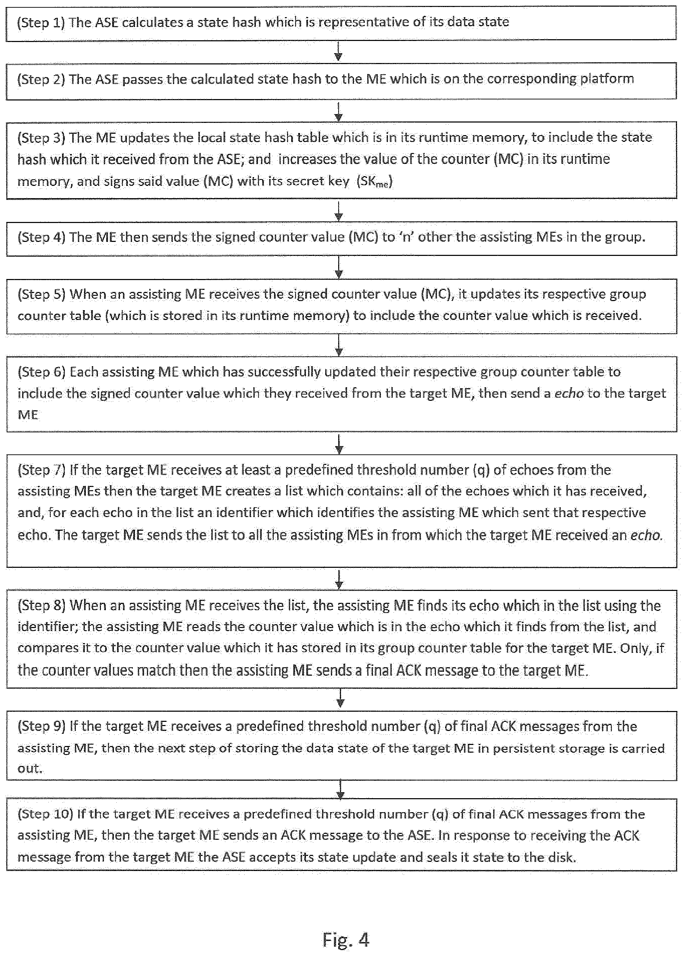

When sealing of the data state of an ASE 6 is to take place then the ASE 6 performs the ASE state update protocol with the help of the ME 8 in the platform. Figure 4 provides a flow chart of the steps involved in the ASE state update protocol according to an embodiment of the present invention. It should be understood that all communication between the ASE and the ME is encrypted and decrypted using the shared key (k_{ASE*i*}) (which was established during the initialization phase). The protocol proceeds as follows:
Step 1: The ASE 6 calculates a hash which is representative of its data state. Preferably, the ASE 6 will have loaded into its runtime memory an initial data state which was provided to it by the OS 9, the OS 9 having retrieved that initial data state from the ASE persistent storage 60; that initial data state which is loaded into the ASE runtime memory 61 will typically be changed or updated (for example the content of the application specific data will be changed/updated). The ASE 6 then calculates a hash which is representative of the changed/updated data state. For example the ASE 6 may have loaded into its runtime memory, application data specific in the form of a blockchain, and a shared key (k_{ASE*i*}), both of which were provided to said ASE by the OS 9; the OS 9 having retrieved a sealed data state having said blockchain and shared key from the ASE persistent storage 60 and having sent said sealed data state to the ASE which decrypted the data state which it received from the OA, and loaded the data state into the ASE runtime memory 61; the blockchain which is loaded into the runtime memory 61 will typically be changed or updated to include a new transaction; the ASE 6 then calculates a hash which is representative of the updated blockchain (i.e. the blockchain which now includes the new transaction) and the shared key (k_{ASE*i*}) (i.e. the ASE 6 then calculates a hash which is representative of the data state of the ASE 6).
Step 2: The ASE 6 passes the calculated hash to the ME which is on the corresponding platform 1 (referred to hereafter as the target ME). The hash will be encrypted by the ASE using the shared key (k_{ASE*i*}) before sending the encrypted hash to the ME.
Step 3: After receiving the encrypted hash from the ASE 6, the target ME 8 will of course decrypt the encrypted hash using the shared key (k_{ASE*i*}), and the target ME 8 then updates the local state hash table which is in its runtime memory 81, to include said hash which it received from the ASE 6; the target ME 8 also increases the value of the counter (MC) in its runtime memory 81, and signs said value (MC) using the secret key (SK_{ME}).
Step 4: The target ME 8 then sends the signed counter value (MC) to all other 'n' MEs (referred to hereafter as the assisting MEs) in the group 2. The signed counter value (MC) is encrypted by the target ME 8 using the symmetric key (k_{ME*i*}), before sending. Although the MEs in the group 2 communicate over a secure channel, the counter is signed by the target ME to preserve its integrity in the case any of the assisting MEs are compromised by an adversary.
Step 5: When an assisting ME receives the signed counter value (MC), the assisting ME decrypts the signed counter value which is receives using the symmetric key (k_{ME*i*}); then the assisting ME verifies that the counter value which it received was sent by the target ME (this is done using the public key (PK_{ME}) which the assisting ME has in its group configuration table for that target ME to verify that the signature on the received signed counter value was created using the paired secret key (SK_{ME}) which belongs only to the target ME); then the assisting ME updates its respective group counter table (which is stored in its runtime memory) to include the counter value which is received; specifically, the assisting ME writes the counter value into the entry of the group counter table which stores the counter value for that target ME. The group counter table is kept in the runtime memory 81 of the respective assisting MEs (it is not included in the persistent state of the ME that is sealed after every update since it would cause an endless propagation of state updates).
Step 6: Each assisting ME which has successfully updated their respective group counter table to include the signed counter value which they received from the target ME, then send a *echo* to the target ME. The echo is encrypted using the symmetric key (k_{ME*i*}) before sending. The echo which each respective assisting ME sends will contain the signed counter value which that assisting ME received and entered into its respective group counter table. Preferably, the echo will be signed with the secret key (SK_{ME*i*}) of that respective assisting ME which sends the echo.
Step 7: If the target ME receives at least a predefined threshold number (q) of echoes from the assisting MEs then the target ME creates a list which contains: all of the echoes which it has received, and, for each echo in the list an identifier which identifies the assisting ME which sent that respective echo. The target ME sends the list to all the assisting MEs in from which the target ME received an *echo.* For example, the assisting ME may sign the echoes they send with their respective secret keys (SK_{ME}); if the target ME receives at least a predefined threshold number (q) of signed echoes from the assisting MEs then the target ME creates a list which contains all of the singed echoes which it has received; the ME sends the list to all the assisting MEs in from which the target ME received an *echo.* The target ME encrypts the list using the symmetric key (k_{ME*i*}) before sending it to the assisting MEs. It should also be understood that the target ME will preferably verify each echo which it receives using the respective public keys (PK_{ME}) which the target ME has in its group configuration table for each of the respective assisting MEs.
Step 8: When an assisting ME receives the list, the assisting ME decrypts the list using the symmetric key (k_{ME*i*}) and finds its own echo which is in the list using the identifier; the assisting ME reads the counter value which is in the echo which it finds from the list, and compares it to the counter value which it has stored in its group counter table for the target ME. Only, if the counter values match then the assisting ME sends a final ACK message to the target ME. If the MC in the *echo* does not match to the MC in the group counter table (indicating a restart), or the platform cannot find its own *echo* in the list, the assisting ME will not send the final ACK to the target ME. For example, the assisting ME may sign the echoes they send with their respective secret key (SK_{ME}); if the target ME receives at least a predefined threshold number (q) of signed echoes from the assisting MEs then the target ME creates a list which contains all of the singed echoes which it has received; the ME sends the list to all the assisting MEs in from which the target ME received an *echo; each* assisting ME which receives the list identifies the echo contained in the list which has that assisting ME's signature; the assisting ME reads the counter value which is in said identified echo, and compares it to the counter value which it has stored in its group counter table for the target ME. Only, if the counter values match then the assisting ME sends a final ACK message to the target ME.
Step 9: If the target ME receives a predefined threshold number (q) of final ACK messages from the assisting MEs, then the next step of storing the data state of the target ME in persistent storage is carried out (i.e. the target ME accepts its data state). For example, if the target ME receives a predefined threshold number (q) of final ACK messages from the assisting ME, then the target ME proceeds to encrypt the data state (i.e. encrypts the counter value (MC) on the counter, the content of the local hash state table, the asymmetric key pair SK_{ME}/PK_{ME}, and the content of the group configuration table which are in the runtime memory 81 of the target ME) and sends that encrypted data state to the OS 9 which stores the encrypted data state in persistent storage (i.e. the data state is sealed).
Step 10: If the target ME receives a predefined threshold number (q) of final ACK messages from the assisting ME, then the target ME sends an ACK message to the ASE 6. In response to receiving the ACK message from the target ME the ASE 6 accepts its state update (i.e. the ASE 6 encrypts its data state and sends that encrypted data state to the OS 9 which stores the encrypted data state in the ASE persistent storage 61) i.e. the data state of the ASE is sealed. For example, in response to receiving the ACK message from the target ME the ASE 6 encrypts its data state (e.g. the ASE 6 encrypts the Application Specific Data (i.e. the content of the Application Specific Data) and the shared key (k_{ASE*i*}) which is in the runtime memory 61 of the ASE) and sends it the encrypted data state to the OS 9 which stores the encrypted data state in ASE persistent storage (i.e. the data state is sealed). Referring back to the example in Step 1, the ASE may encrypt the updated blockchain (i.e. the blockchain which now includes the new transaction and the shared key) and sends the encrypted updated blockchain and shared key to the OS which stores the encrypted updated blockchain and shared key in the ASE persistent storage 60.

In should be understood that in one embodiment all data/communication which the target ME 8 sends to the assisting MEs 8 in the group 2 is signed using the secret key (SK_{ME}) so that that data/communication is both signed using the secret key (SK_{ME}) and encrypted using the symmetric key (k_{ME*i*}) before sending. However, in another preferred embodiment only the counter value (MC) of the counter in the target ME 8 is signed using the secret key (SK_{ME}), before sending it to the assisting MEs in the group 2; thus in this preferred embodiment only the counter value (MC) both signed using the secret key (SK_{ME}) and encrypted using the symmetric key (k_{ME*i*}) before sending, while all other data/communication which the target ME 8 sends to the assisting MEs is encrypted using the symmetric key (k_{ME*i*}) only (i.e. is not signed using the secret key (SK_{ME})).

The signed counter value (MC) is encrypted by the target ME 8 using the symmetric key (k_{ME*i*}), before sending.

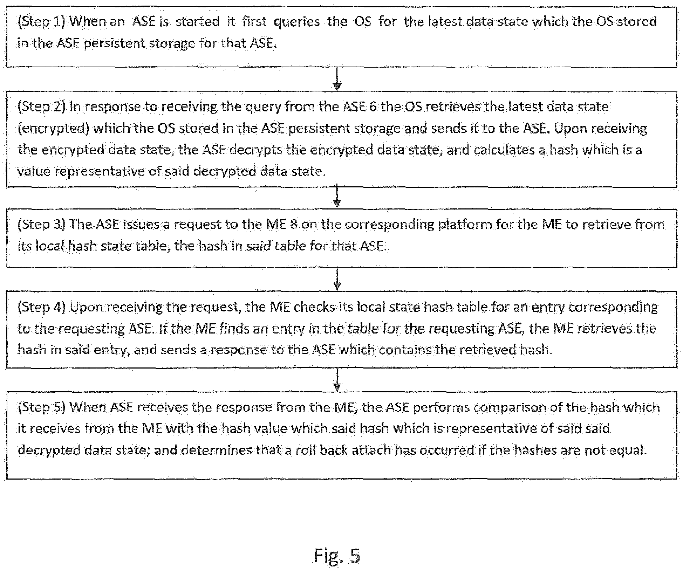

Figure 5 is a flow chart which illustrates the steps taken, according to an embodiment of the present invention, when an ASE 6 on any platform 1 in the group 2, is to recover its data state after restart. In other words, figure 5 illustrates an "ASE start protocol". Referring to Figure 5:
Step 1. When an ASE 6 is started it first queries the OS 9 for the latest data state which the OS stored in the ASE persistent storage 60 for that ASE 6.
Step 2. In response to receiving the query from the ASE 6 the OS 9 retrieves the latest data state which the OS stored in the ASE persistent storage 60 and sends it to the ASE 6. The data state which is sent from the OS to the ASE 6 is encrypted. Upon receiving the encrypted data state, the ASE decrypts the encrypted data state, and calculates a hash which is a value representative of said decrypted data state. It should be noted that if the ASE 6 has never before sent a data state to the OS to be saved in the ASE persistent storage 60 (i.e. if the ASE 6 has never before encrypted a data state and sent the encrypted data state to the OS for storage in the ASE persistent storage 60), then the encrypted data state which is sent from the OS 9 to the ASE 6 will be an empty field.
Step 3. The ASE issues a request to the ME 8 on the corresponding platform 1 for the ME to retrieve from its local hash state table, the hash in said table for that ASE. The request will be encrypted by the ASE using the shared key (k_{ASE*i*}) before sending the encrypted request to the ME. It should be noted that this step 3 is performed even if the encrypted data state which was sent from the OS to the ASE was empty an empty field.
Step 4. Upon receiving the request, the ME will first decrypt the request using the shared key (k_{ASE*i*}), the then ME checks its local state hash table (which is in its runtime memory 81) for an entry corresponding to the requesting ASE. It should be understood that the counter value (MC) on the counter, the local hash state table, the asymmetric signing key pair SK_{ME}/PK_{ME}, and the group configuration table, will already be present in the runtime memory 81 of the ME prior to performing step 4 (in one embodiment the data state of the ME will already be present in runtime memory e.g. if the ME has not been restarted; in another embodiment the ME will have been restarted and the "ME start protocol" (as will be discussed in detail below) will have been carried out and a data state which was retrieved from persistent storage by the OS will have been loaded into the runtime memory 81). If the ME finds an entry in the local state hash table for the requesting ASE, the ME retrieves the hash in said entry, and sends a response to the ASE which contains the retrieved hash. The ME will encrypt the response using the shared key (k_{ASE*i*}) before sending it to the ASE. It should be understood that if the ASE in question has never before sent the ME a hash, then the ME will not have any entry in its local state hash table for the requesting ASE, and thus the response which the ME sends to the ASE will be empty.
Step 5. When ASE receives the response from the ME, the ASE first decrypts the response, and then performs a comparison of the hash which was in the response with the hash which the ASE calculated which is representative of said data state which was sent to the ASE by the OS.

There are three possible results of the comparison: (i) The compared hashes are equal; (ii) the data state which was sent from the OS to the ASE was empty and the ME sent an empty response indicating there is no previously saved hash in the local hash state table for the said ASE; or (iii) the compared hashes are not equal.

If the compared hashes are equal then the ASE loads the data state which was sent by the OS. In other words the ASE loads into its runtime memory 61 the Application Specific Data (and the shared key (k_{ASE*i*})) which was in the encrypted data state which was sent to the ASE by the OS. When the compared hashes are equal this indicates that the data state which was sent by the OS to the ASE was the latest data state of the ASE (e.g. the latest data state of the ASE immediately before it was restarted).

If the sealed data state which was sent from the OS to the ASE was an empty field and the ME sent an empty response indicating there is no previously saved hash in the local hash state table for the said ASE, then this indicates that the ASE 6 has never before sent a data state to the OS to be saved in the ASE persistent storage 60. In this case the ASE 6 starts an initialization procedure. In the initialization procedure, the ASE on a platform 1 performs an attestation of the ME of that platform 1. The code measurement of the ME can be hard-coded to the ASE implementation or provisioned by the ASE developer. Once the ASE has authenticated the ME, it can run a key establishment protocol with the ME to establish the shared key (k_{ASE*i*}). The ME adds the established shared key (k_{ASE*i*}) to its local hash state table in its runtime memory 81, together with a locally unique identifier id_{ASE*i*} which identifies the ASE. The ASE adds the same shared key (k_{ASE*i*}) to its own runtime memory and then seals the content of the runtime memory so that the shared key (k_{ASE*i*}) is stored in the persistent storage 60 of the ASE. The shared key (k_{ASE*i*}) is used to encrypt and authenticate communication between the ASE and the ME.

It should be understood that if the encrypted data state which was sent from the OS to the ASE was an empty field, but ME sent a previously saved hash which it retrieved from its local hash state table, then this indicates that a rollback attack has occurred and the ASE does not load the data state which was sent to it by the OS into its runtime memory 61.

If the compared hashes are not equal, then the ASE does not load the data state which was sent by the OS. In other words the ASE does not load into its runtime memory 61 the Application Specific Data (and the shared key (k_{ASE*i*})) which was in the sealed data state which was sent to the ASE by the OS. If the compared hashes are not equal then this is an indication that a rollback attach has occurred; in other words this is an indication that the data state which was sent by the OS to the ASE does not correspond to the latest data state of the ASE (e.g. does not correspond to the latest data state of the ASE immediately before it was restarted), the data state which was sent by the OS to the ASE may for example correspond to an earlier data state which preceding the latest data state (e.g. a data state which precedes the data state which the ASE before immediately before it was restarted).

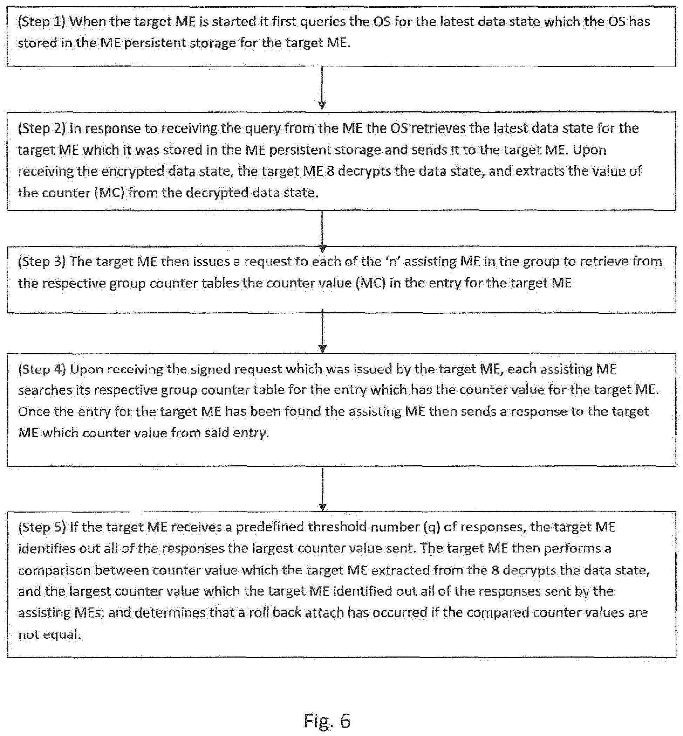

Figure 6 is a flow chart illustrating the steps taken in an embodiment of the present invention, when an ME 8 (referred to hereafter as the 'target ME') is started for the first time or is restarted. In other words figure 6 illustrates the steps taken in an "ME start protocol". These steps can allow the target ME to retrieve its own self-signed counter value (MC) from the 'n' other ME's (referred to hereafter as the assisting ME's) in the group 2, and also allow the target ME to retrieve potentially lost counter values MCs of all the 'n' assisting ME's in the group 2. Referring to the numbered steps illustrated in Figure 6:
Step 1. When the target ME 8 is started it first queries the OS 9 for the latest data state which the OS 9 has stored in the ME persistent storage 80 for said target ME.
Step 2. In response to receiving the query from the ME 8 the OS 9 retrieves the latest data state for the target ME 8 which is stored in the ME persistent storage 80 and sends it to the target ME 8. The data state which is sent from the OS to the target ME 8 is encrypted. Upon receiving the encrypted data state, the target ME 8 decrypts the data state, and extracts the value of the counter (MC) from the decrypted data state. It should be noted that if the target ME 8 has never before encrypted and sent a data state to the OS to be saved in the ME persistent storage 80 of the OS (in other words if the ME has never before accepted a data state), then the sealed data state which is sent from the OS to the target ME 8 will be an empty field.
Step 3. The target ME 8 then issues a request to each of the 'n' assisting ME 8 in the group 2 to retrieve from the respective group counter tables the counter value (MC) in the entry for the target ME 8. The target ME 8 signs each request it sends using the secret key (SK_{ME}). The signed request is also encrypted by the target ME 8 using the symmetric key (k_{ME*i*}), before sending it to the target MEs 8. The target ME 8 issues these signed requests to the assisting MEs even if the encrypted data state which was sent from the OS to the target ME was an empty field.
Step 4. Upon receiving the signed request which was issued by the target ME 8, each assisting ME decrypts the signed request using the symmetric key (k_{ME*i*}) which is has in its group configuration table for that target ME, and verifies that the signed request which it received was sent by the target ME (this verification is done using the public key (PK_{ME}) which the assisting ME has in its group configuration table for that target ME to verify that the signature on the received signed request was created using the paired secret key (SK_{ME}) which belongs only to the target ME). Each assisting ME searches its respective the group counter table which it has stored in its runtime memory 81, for the entry in said table which contains the counter value for the target ME. Once the entry for the target ME has been found the assisting ME then sends a response to the target ME 8; said response contains the counter value from said specific entry of the group counter table which contained the counter value for the target ME; additionally, the response includes the complete group counter table that the assisting ME has stored in its runtime memory 81. The assisting ME will sign the response using its own secret key, and will encrypt the signed response using its respective symmetric key (k_{ME*i*}) before sending it to the target ME.

In a further variation of this embodiment the response does not include the complete group table and rather only includes the counter value and public key (PK_{ME}).

It should be noted that if the target ME 8 has never before sent a counter value to the assisting MEs for storage in their respective group counter tables, then the entry in the respective group counter counters for the target ME will be empty; accordingly, the responses which the target ME 8 receives from the assisting ME will contain an empty counter value.

It should be noted that the target ME may search its respective the group counter table for the entry in said table which contains the counter value for the target ME using any suitable means; for example after the target ME has verified the signed request using the public key (PK_{ME}) of the target ME, the assisting ME may then identify the entry in said group counter table which contains the counter value for the target ME as being the entry which contains the public key (PK_{ME}) which was successfully used to verify the signed request. In another embodiment after the assisting ME has decrypted the signed request using the symmetric key (k_{ME*i*}), the assisting ME could then search its group configuration table for the entry which contains the symmetric key (k_{ME*i*}) which was successfully used to decrypt the signed request; the public key (PK_{ME}) at that entry will correspond to the public key of the target ME which send the signed request; the assisting ME may then identify the entry in said group counter table which contains the counter value for the target ME as being the entry which contains that public key (PK_{ME}). Thus in these exemples, the public key (PK_{ME}) which verifies the signature on the received signed request which was issued by the target ME 8 enables each assisting ME to locate the specific entry in its group counter table which contains the counter value for the target ME. In yet a further embodiment the entry in said group counter table which contains the counter value for the target ME could be done using IP address of the target ME which send the signed request; in this embodiment each entry in the group counter table will contain the corresponding IP address for each of the other MEs in the group 2.

Step 5. If the target ME receives a predefined threshold number (q) of responses, the target ME decrypts each response using the respective symmetric keys (k_{ME*i*}) for each assisting ME, and verifies each response using the respective public key (PK_{ME}) for each respective assisting ME, and identifies out all of the responses the largest counter value sent. Most preferably, only if the target ME receives a predefined threshold number (q) of responses which contain a signature created using the respective secret key of that assisting ME which is paired to the public key (PK_{ME}) for that assisting ME in the persistent storage 80 of the target ME (i.e. only if the ME receive a redefined number of response which have been successfully verified), does the target ME identify out all of the responses sent the largest counter value sent. The largest counter value sent is identified because some assisting MEs might have an old counter value (i.e. not the latest counter value which the target MC would have sent to the assisting ME's for storage in their respective group counter tables) stored in their group counter table, or some of the assisting MEs may be compromised by an adversary so that they purposefully send an old counter value. The target ME then performs comparison of the counter value which the target ME extracted from the encrypted data state which was sent to the target ME by the OS, with the largest counter value which the target ME identified out all of the responses sent by the assisting MEs.

There are three possible results of the comparison: (i) The compared counter values (i.e. the counter value which the target ME extracted from the sealed data state which was sent to the target ME by the OS, and the largest counter value which the target ME identified out all of the responses sent by the assisting MEs) are equal; (ii) the data state which was sent from the OS to the ME was empty; or (iii) the compared counter values are not equal.

If the compared counter values are equal then the target ME loads the data state which was sent by the OS. In other words the target ME loads into its runtime memory 81 the counter value (MC) of the counter, the content of the local hash state table, the asymmetric key pair SK_{ME}/PK_{ME}, and the content of the group configuration table, which was in the sealed data state which was sent by the OS to the target ME. When the counter values are equal this indicates that the data state which was sent by the OS to the target ME was the latest data state of the ME (e.g. the latest data state of the target ME immediately before it was restarted).

If the sealed data state which was sent from the OS to the target ME was an empty field and if the responses which the target ME 8 receives from the assisting MEs contain an empty counter value, then this indicates that the target ME has never before sent a data state to the OS to be stored in the ME persistent storage 80 and that the target ME 8 has never before sent a counter value to the assisting MEs in the group 2 for storage in their respective group counter tables; this will typically be the case if the target ME is being started for the very first time. In this case the target ME will start the 'ME initialization procedure'. As discussed above during the 'ME initialization procedure' the target ME will create asymmetric keys pair, will create a counter, and will perform attestation of all of the other MEs in the group. The target ME obtains the public keys of other MEs in the group, and obtains the measurement of each ME in the group and the processor attestation key of each ME in the group. The target ME verifies that the code measurement matches to its own code and that the processor-specific attestation key belongs to the group. If both of these conditions hold, the target ME saves the received public key to its group configuration table. Once the MEs have mutually attested each other, they can run an authenticated key agreement protocol to establish respective symmetric key which can be used to encrypt communication between the respective MEs. The target ME creates a group counter table; the group counter table serves as an empty template for the counters of other MEs that will be populated during state update protocol runs. After these steps, the initialization is complete and the target ME sends its state (containing the signing key pair, its own counter (value zero), and the group configuration table) to the OS which stores the state in the ME persistent memory 80.

It should be understood that if the sealed data state which was sent from the OS to the target ME was an empty field, but the responses which the target ME 8 receives from the assisting MEs did contain a counter value (in other words that the responses did not have an empty counter value), then this indicates that a rollback attack has occurred and the target ME does not load the data state which was sent by the OS to the ME.

If the compared counter values are not equal then the target ME does not load the data state which was sent by the OS to the ME. In other words the target ME does not load into its runtime memory 81 the counter value (MC) on the counter, the content of the local hash state table, the asymmetric key pair SK_{ME}/PK_{ME}, and the content of the group configuration table, which was in the sealed data state which was sent by the OS to the target ME. If the compared counter values are not equal (e.g. if the counter value which the target ME extracted from the sealed data state which was sent to the target ME by the OS, is smaller than the largest counter value which the target ME identified out all of the responses sent by the assisting MEs) then this is an indication that a rollback attack has occurred; in other words this is an indication that the data state which was sent by the OS to the target ME does not correspond to the latest data state of the target ME (e.g. does not correspond to the latest data state of the target ME immediately before that target ME was restarted), the data state which was sent by the OS to the target ME may for example correspond to an earlier data state which precedes the latest data state (e.g. a data state which precedes the data state which the target ME had immediately before said target ME was restarted).

As described above the group counter table is stored in the runtime memory 81 of an ME; thus when the target ME is turned off or restarted it will lose its group counter table. In a further embodiment the target ME can recover its group counter table using the complete group counter tables of the 'n' assisting ME's in the group 2: In step 4 above once the entry for the target ME has been found the assisting ME then sends a response to the target ME 8; said response contains the counter value from said specific entry of the group counter table which contains the counter value for the target ME, along with the public key (PK_{ME}) which was in said same entry; additionally the response includes the complete group counter table that the assisting ME has stored in its runtime memory 81. The target ME can use complete group counter tables which it receives in the responses to recover and recreate its group counter table:

In order to recover its group counter table the target ME 8 first generates a template group counter table with 'n+1' empty entries, each entry is destined to be populated with the counter value of a respective assisting ME in the group 2. The target ME then compares the respective entries of all of the group counter tables which it received in the responses sent by the assisting ME; specifically the target ME compares the counter values for a specific assisting ME, which are provided in the group counter tables of all the responses, and will identify that largest counter value for that specific assisting ME; the target ME will then enter into its template group counter table that largest counter value for that specific assisting ME. These steps will be repeated for each assisting ME in the group 2 so that when the template group counter table has been fully populated it will contain a counter value for each assisting ME in the group 2.

As mentioned above, when an ASE needs to seal data, the target ME increments the value of the counter in its runtime memory thus providing an updated data state in runtime memory 81; the target ME signs the incremented counter value (MC) and sends the signed incremented counter value (MC) to the 'n' assisting ME's in the group 2. The target ME then waits for signed echoes from the assisting ME; only if the target ME received at least a predefined threshold number (q) of singed echoes will the target ME continue to the next step of creating a list of the signed echoes which the target ME received and sending that list to the 'n' assisting ME's. Each assisting ME checks the list and sends an acknowledgement to the target ME only if the assisting ME finds its self-signed echo on the list. Only if the target ME only receives at least a predefined threshold number (q) of acknowledgments will the target ME proceed to accept the updated data state.

Each acknowledgment from an assisting ME, confirms that that assisting ME has successfully received and stored the incremented counter value which the target ME initially sent.

If an adversary blocks the communication between the assisting MEs and the target ME so that the target ME receives less than the predefined threshold number (q) of signed echoes, then the target ME does not accept the updated data state. If an adversary restarts the assisting MEs in the group before the assisting MEs have sent, collectively, at least the predefined threshold number (q) signed echoes, then the target ME does not accept the updated data state.

If an adversary allows at least the predefined threshold number (q) signed echoes to be received by the target ME, then the target ME can proceed to the next step wherein it creates a list of the received signed echoes and sends the list to the assisting MEs. Depending on the adversary's actions on assisting MEs after they have sent echoes, two cases are possible:

Assume that at least 'q' (i.e. said predefined threshold number (q)) number of assisting ME's have the updated their respective group counter tables to include the incremented counter value which the target ME sent. After receiving the list of singed echoes from the target ME each of these 'q' assisting ME's can verify their self-signed echo and then compare the counter value in the signed echo to the counter value they have in its group counter tables; the counter value in the signed echo will match the counter value they have in its group counter table, so the assisting ME will issue an acknowledgment to the target ME.

In one example, an adversary may block communication between the assisting MEs and the target ME, so that less than the predefined threshold number (q) of acknowledgements reach the target ME. In another example, the adversary may restart the assisting MEs before they issue the acknowledgment to the target ME, so that less than the predefined threshold number (q) of acknowledgments are issued to the target ME. In both examples less than the predefined threshold number (q) acknowledgements will be received by the target ME, consequently, the target ME will not accept the updated data state.

In a further example an adversary may restart the assisting MEs after the issue they have issued the acknowledgment to the target ME, so the target ME does receive at least the predefined threshold number (q) of acknowledgements. In this case since the target ME does receive at least the predefined threshold number (q) of acknowledgements the target ME will accept the updated data state. Furthermore, successful data state recovery of the restarted assisting ME can take place since all of the other MEs in the group already have the updated MC of the target ME and can provide it upon recovery (adversary allowed echoes to pass).

Assuming that the adversary blocks all the communication between the target ME and each of the assisting MEs. The adversary then first allows the incremented counter value which was sent by the target ME, to be delivered to one assisting ME only, and that one assisting ME returns a signed echo in response to receiving the incremented counter value; after that, the adversary restarts said one assisting ME, which initiates that assisting ME to carry out the above-mentioned "ME start protocol" and to recover its group counter table in the manner described above using the complete group counter tables which the ME receives in the responses sent by the other assisting MEs in the group. The restarted assisting ME recovers the previous MC value for the target ME, because all of the other assisting MEs in the group have not yet updated their group counter tables to include the updated MC value for the target ME (due to the adversary having blocked all the communication between the target ME and each of the assisting MEs). The adversary repeats the same steps for each one of the assisting MEs consecutively, allowing the updated MC value which was sent by the target ME to be delivered to that one assisting ME so that the assisting ME will send a signed echo to the target ME, and then restarting said assisting ME. Accordingly, after the adversary has repeated the steps on 'q' (i.e. said predefined threshold number (q)) number of assisting MEs then the target ME will have received the predefined threshold number (q) number of signed echoes, and therefore the target ME carries out the next step of creating the list of signed echoes and sending that list to the 'n' assisting MEs. At each of the assisting MEs, upon receiving the list the assisting ME will find in the list the echo which has its signature, and the assisting ME which extract the counter value from that echo; the assisting ME will then compare the counter value which it extracted from the echo with the counter value for the target ME which is in the group counter table; the assisting ME will only send an acknowledgement if both counter values match. Since all of the 'n' assisting MEs have the previous counter value in their respective group counter tables (and not the incremented counter value which was last sent by the target ME), none of the assisting MEs will send an acknowledgement to the target ME. Accordingly the target ME will not receive the predefined threshold number (q) acknowledgements and consequently the target ME will not accept the updated data state.

The present invention allows to configure two parameters: i) the maximum number of compromised platforms which are to be tolerated, denoted as f, and ii) the maximum number of platforms that might be unavailable, denoted as u. In an embodiment the predefined threshold number of responses (q) may be set to (n+f+1)/2, wherein n+1 is the total number of platforms 1 in the group 2 (i.e. '1' target platform + 'n' assisting platforms 1) and f is a maximum number of compromised platforms 1 to be tolerated. The maximum tolerated number of compromised platforms is f; preferably f < n ≡ f ≤ n - 1. If all platforms in the group would always be available then the maximum tolerated number of compromised platforms could be up to n - 1 compromised platforms, having at least 1 honest platform that always delivers the latest MC. However, it should be understood that the predefined threshold number (q) could be any suitable value

In the preferred embodiment, the target ME must receive (n+f+1)/2 singed echoes and (n+f+1)/2 acknowledgments from the assisting MEs before the target ME can accept the updated data state. If the target ME receives less than (n+f+1)/2 singed echoes or less than (n+f+1)/2 acknowledgments from the assisting MEs then the target ME does not accept the updated data state.

Because f platforms may be compromised after the target ME has accepted the updated data state, then at 'q-f' assisting MEs have in their group counter table the correct counter value for the target ME, so in this particular example at least (n+f+1)/2 - f = (n-f+1)/2 assisting MEs have in their group counter table the correct counter value for the target ME; in other words at least (n-f+1)/2 assisting MEs have in their group counter table a counter value, for the target ME, which is equal to the counter value of the counter in the persistent storage 81 of the target ME.

Since the assisting MEs store the group counter table in their respective runtime memories 81, when an assisting ME is restarted it loses the content of its runtime memory and thus loses its group counter table. As described above an ME can recover its group counter table using the complete group counter tables which the ME receives in the responses sent by the other assisting MEs in the group. Most preferably the number of restarted assisting MEs is less than 'q' (i.e. is less than said predefined threshold number), so that the maximum number of restarted assisting MEs is q - 1. In this example we consider the predefined threshold number of responses (q) to be (n+f+1)/2, consequently, in this example when the maximum number q-1 assisting MEs are restarted the number of assisting ME in the group which have not being restarted is n - (q - 1) = n - (n+f+1)/2 + 1 =(n-f+1)/2. According there are (n-f+1)/2 assisting MEs in the group which still have a group counter table which contains the latest counter value which was sent by the target ME, stored in their respective runtime memories 81, which is a sufficient number of assisting MEs to enable the q-1 restarted assisting MEs to recover the group counter table.

In the ME start protocol, the target ME accepts a data state only if the only if it receives at least q responses from the assisting MEs. Assuming that for the latest data state of the target ME the target ME successfully distributed its counter value to the 'n' assisting MEs, then at least n-2f+1 assisting MEs have the latest counter value. During counter reading, any of the f assisting MEs of the respective f compromised platforms 1, may offer the target ME an older counter value (MC); however because the target ME requires q responses, despite of possible network partitioning, at least one of the assisting platforms will offer the latest MC value (which will be larger than the older counter value offered by any of the f assisting MEs of the f compromised platforms); since the target ME accepts the largest counter value (ME) the older counter value (MC) offered by the compromised assisting ME will not be accepted by the target ME.

In another example the predefined threshold number of responses (q) may be set to (u+f+1), wherein f is a maximum number of compromised platforms 1 to be tolerated, and u is the maximum number of platforms that might be unavailable. Thus even in this case where the maximum number (u) of platforms 1 are unavailable, and the maximum number (f) of platforms 1 have been compromised, there will still be at least one assisting ME which will have the latest counter value (MC) for the target ME in its group counter table; this at least one assisting ME will send the latest counter value to the target ME, thus preventing the state of the target ME from being rolled back to a previous state at restart of the target ME.

In a further embodiment of the present invention, the members of the group of platforms which are to assist each other in distributed rollback protection can be adjusted. In the previous embodiment the group owner issues a signed list of processor public keys that define the protection group. In this embodiment then the group owner is able to update/modify the members of the group (i.e., exclude old members and add new ones) without disabling access to the already rollback-protected sealed data; this is particularly useful if one or more processors in the group are found to be compromised or need hardware replacement.

During system initialization, the master enclave verifies the signed list of group member keys and seals the group configuration. When a group update is needed, the group owner issues an updated list that will be processed and again sealed by the master enclave. However, the adversary should not be able to revert the group to its previous configuration (e.g., one that includes compromised platforms) by replaying the previous sealed group configuration. Since group updates are typically infrequent, they can be protected using TPM counters.

In one exemplary embodiment the following steps may be taken:
1. The Group Owner first assembles a list of platforms 1 that are going to be a part of the protection group 2.
2. For each platform, the Group Owner acquires a processor-specific public key.
3. The list is signed by the Group Owner's public key (certificate issuing) that is available to all participating platforms (enabling certificate verification by the participating platforms in the protection group) where the certificate includes the version number (preferably starting from '1').
4. During system initialization, each ME verifies the certificate and accepts the group configuration. Preferably in this embodiment the OS is trusted during first system initialization.
5. Additionally, each ME establishes a secure connection (e.g. a shared key) to a TPM residing locally on the platform, creates a monotonic counter in the TPM and increments it to match the certificate version (and thus, the version of the current group configuration).
6. If the group configuration is updated at a certain point in time, the Group Owner issues a new certificate containing the new protection group and the new version number.
7. Upon receiving the new group configuration at an ME, that ME verifies it, and increment the monotonic counter in the TPM to match the certificate version, subsequently storing the newly received list and using it further on in the protocol execution (establishment of shared keys with new platform in the group, and communication stop to all platforms that are no longer part of the group).
8. If the ME is restarted it acquires the group configuration list from the sealed data and subsequently verifies it version number to the monotonic counter residing in the TPM.

For example, an enclave that requires rollback protection chooses a set of SGX processors that should form a protection group. The enclave can discover the assisting processors from a public directory, peer-to-peer manner etc. The enclave broadcasts the proposed group configuration to all chosen platforms (also referred to as 'nodes') using a byzantine agreement protocol (also known as total-order broadcast protocol) that tolerates malicious nodes and guarantees that all non-malicious nodes agree on the same value. When an update to the group configuration is needed, the leader repeats the same process. Byzantine agreement protocols have high message complexity. For example, the Practical BFT protocol requires O(*n*²) messages, and thus byzantine agreement is feasible only for relatively small group sizes. A protection group of n = 20 nodes would tolerate f ≤ n - 1 = 19 compromised processors, so that the present invention can provide strong security guarantees also without a trusted authority.

Above we have discussed group setup using a trusted authority and agreement protocols. Another alternative is that each platform distributes its state to a freely chosen set of assisting platforms that in turn choose their assisting platforms independently. The set of platforms can be even selected for each state update separately. Asymmetric groups offer flexible deployment, as every node is free to choose where it distributes its state at any given time. However, the different trust model requires the following minor changes

In yet a further embodiment the participating platforms decide the protection group configuration directly themselves i.e. the platforms in decide themselves who are to be members of the group 2. Advantageously in this embodiment no group owner is required. In the presence of potentially malicious platforms, such group establishment can be done using the known byzantine agreement protocol. Another alternative is using asymmetric groups where the ME of each platform distributes its state to a freely chosen set of assisting MEs (on assisting platforms) that in turn choose their assisting MEs (on assisting platforms) independently. Asymmetric groups offer flexible deployment. However, the different trust model requires minor adaptations to the above-described protocols:

The first adaptation is in the recovery of master enclave's own counter value (MC) after restart. We illustrate this with an example. Assume that a node distributes its counter to one set of nodes (set1). At the next state update the node distributes its counter to another, different, set of nodes (set2). The rollback protection system should preferably prevent attacks, where the adversary causes counter recovery form set1which would result in a rollback. To prevent such attacks, the node can request set 1 to remove the saved counter from their memory and only after a successful confirmation the node proceeds with the state update to set 2. The list of nodes to communicate is stored in sealed format on the disk, and after master enclave restart the master enclave unseals the list and contacts the nodes on it. If the adversary replays an old sealed data, the master enclave gets no responses (as the counter has been deleted) and aborts unsealing.

Another adaptation is in the recovery of stored counters after master enclave restart. The master enclave maintains counters for other nodes in its runtime memory (no sealing to prevent endless update propagation).When a master enclave is restarted, it needs to obtain its own counter value, and additionally the lost counter values of other assisting nodes. In asymmetric groups, stored counter recovery must be handled differently. One option is to request the counter back from the sender, after a master enclave restart. This requires that the processor identity for each stored counter is saved on the local persistent storage. A malicious OS can prevent recovery of the counter. If the adversary prevents counter recovery on predefined quorum of nodes (depends on the required security level and number of nodes protecting the counter - adjustable), the attack target can no longer obtain the counter from sufficiently many nodes and unseal the data(denial of service).

In yet a further embodiment the method/protocol of the present invention could further comprises the step of including into the sealed data a history of input values (a hash chain) and the step of verifying that history during recovery (i.e. during the "ME start protocol"). In this embodiment ASE records all inputs to a hash chain: *h(h(h(i₁)*∥*i₂)...).* Similarly, the ME forms an aggregated hash with every hash received from ASEs. The aggregated hashes is preferably sealed by the ME prior to sending the signed counter value (MC) to the assisting MEs, and the message with the signed counter value MC should include the last aggregated hash. This would allow the enclaves to recover from system crashes at critical time points. For example, the ME could accept the previously sealed state and compare the provided input to match the aggregated hash. If the inputs match, it is safe to proceed. The same principle is valid for ASEs. The limitation of this approach is that enclaves must be deterministic.

In yet a further embodiment the master enclave is enhanced to support migration. In a migration operation, an application specific enclave (ASE) first unseals (i.e. decrypts) its persistent data and passes it to the master enclave. The master sends the enclave data to another master within the same protection group together with the measurement of the ASE. The communication channel between the master enclaves is encrypted and authenticated, as discussed previously. On the receiving processor, the master enclave passes the enclave data to an instance of the same application enclave (based on attestation using the received measurement) which can seal it. Combined with group updates, such enclave data migration enables flexible management of available computing resources.

It should be understood that while the above mentioned exemplary embodiments are described as providing rollback protection system for SGX; the method/protocol of the present invention could be used in other environments (e.g. ARM TrustZone). To implement our solution on TrustZone, the functionality of the master enclave could be implemented as part of the security kernel. The secure communication between application enclaves and master enclave could be implemented as function calls. The attestation between master enclaves could be implemented by the security kernel. The security kernel could measure its own code and verify that another TrustZone platform is running the same security kernel configuration.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. A method for determining if a rollback attack has occurred, the method comprising the steps of,
receiving at a target master enclave, an encrypted data state from an operating system, wherein the encrypted data state includes a counter value;
decrypting the data state and extracting the counter value from the decrypted data state;
sending, from each of a plurality of assisting master enclaves to the target master enclave, a counter value for the target master enclave, which that respective assisting master enclave has stored in its memory;
out of the counter values which the plurality of assisting master enclaves sent, identifying the largest counter value;
comparing the largest counter value with the counter value which the target master enclave extracted from the decrypted data state;
determining that a rollback attack has occurred if the compared counter values are not equal.

2. A method according to claim 1 wherein the method comprises, sending from each of a plurality of assisting master enclaves to the target master enclave, a group counter table which contains counter values for all of said master enclaves, which that respective assisting master enclave has stored in its memory.

3. A method according to claim 2 wherein the method further comprises at the target ME recovering a group counter table by,
generating a template group counter table which is to be populated with the counter values of said plurality of assisting master enclaves;
for each assisting master enclave, comparing the counter values for that assisting master enclave which are provided in the group counter tables of all the responses, and identifying that largest counter value for that assisting master enclave, and entering into its template group counter table that largest counter value for that assisting master enclave.

4. A method for determining if a rollback attack has occurred, the method comprising the steps of,
receiving at an application specific enclave, an encrypted data state from an operating system;
decrypting the data state, and determining a hash which is a value representative of the decrypted data state;
sending from the target master enclave to the application specific enclave a hash which that application specific enclave last sent to the master enclave;
comparing the hash which represents the decrypted data state with the hash which the target master enclave sent to the application specific enclave;
determining that a rollback attack has occurred if the compared hashes are not equal.

5. A method according to any one of the preceding claims comprising the steps of,
updating the data state of a target master enclave which is running on a processor;
incrementing the value of a counter in the runtime memory or the target master enclave in response to updating the data state;
sending the value of the counter to a plurality of assisting master enclaves, each of the assisting master enclaves running on different processors;
at each of the assisting master enclaves which receive the value of the counter which was sent by the target master enclave, storing said value of the counter in a memory of the respective assisting master enclave, and sending an echo to said target master enclave after said assisting master enclave has stored the value of the counter in said memory, wherein the echo includes the value of the counter which that assisting master enclave stored in said memory, and wherein the echo has a signature of said assisting master enclave;
if said target master enclave receives above a predefined threshold number (q) of the signed echoes, then generating a list of the received signed echoes;
sending the list to the assisting master enclaves;
at each of the assisting master enclaves which receive the list, identifying in the list the echo which is signed by that assisting master enclave, and comparing the value of the counter which is said identified echoes with the value of the counter stored said memory of said assisting master enclave, and sending an acknowledgement to the target master enclave if the compared values match;
if the target master receives a predefined threshold number (q) of acknowledgments then storing the updating the data state and counter value in persistent storage.

6. A method according to claim 5,
wherein the step of updating the data state of a target master enclave which is running on a processor, comprises updating a local state hash table to include a new hash for an application specific enclave, wherein the new hash is a value which is representative of an updated data state of an application specific enclave; and
wherein the method further comprises the step of sending a message from the target master enclave to the application specific enclave, if the target master enclave receives a predefined threshold number (q) of acknowledgments; and
storing the data state of the application specific enclave in persistent storage in response to receiving said message at the application specific enclave.

7. A method according to claim 6 wherein the data state of the application specific enclave comprises application specific data, and wherein the method comprises the steps of,
adjusting the application specific data so as provide the application specific enclave with an updated data state; and
calculating the new hash which is representative of an updated data state of an application specific enclave

8. A method according to claim 7 wherein application specific data comprises a blockchain, and wherein the step of adjusting the application specific data so as provide the application specific enclave with an updated data state comprises adding a new transaction to blockchain.

9. A method according to any one of the preceding claims wherein the predefined threshold number (q) is q = ((n+1+f)/2), wherein n+1 is the total number of master enclaves, and f is a maximum number of compromised platforms, or wherein the predefined threshold number (q) is q = (u+f+1) wherein f is a maximum number of compromised platforms, and u is a maximum number of unavailable platforms.

10. A method according to any one of the preceding claims wherein the method further comprises the steps of,
at the target master enclave attesting each of the assisting master enclaves, and then establishing a respective symmetric key (k_{ME*i*}) for each of the assisting master enclaves which is used to encrypt communication between the target master enclave and that respective assisting master enclave.

11. A method according to any one of the preceding claims wherein the method further comprises the steps of, at an application specific enclave attesting the target master enclave, and then establishing a shared key (k_{ASE*i*}) which is used to encrypt communication between the target master enclave and that application specific enclave.

12. A method according to any one of the preceding claims wherein the target master enclave and each of the plurality of assisting master enclaves are run on different respective platforms, and wherein each of the respective platforms are run on different respective processors.

13. A system which can be used to perform the method according to any one of claims 1-12, the system comprising,
a plurality of platforms (1) which run on different, respective, processors; and a persistent storage (100) for each respective platform (1);
each of the plurality of platforms (1) comprising, a master enclave (8) and a plurality of application specific enclaves (6), and an operating system (9), wherein the operating system (9) provides a communication interface between the master enclave (8) and the persistent storage (100) and provides a communication interface between the application specific enclaves (6) and the persistent storage (100);
wherein the persistent storage (100) for a respective platform (1) comprises the last data state which the master enclave (8) of that platform (1) sent to the operating system (9) for storage in the persistent storage (100), wherein said data state includes a counter value for a counter in the master enclave (8);
and wherein the master enclave (8) of each respective platform (1) comprises a group counter table which contains counter values for the counters of all of the other master enclaves (8) on the other platforms (1), which it received from respective other master enclaves (8) belong to the other platforms (1).

14. A system according to claim 13 wherein the persistent storage for a respective platform comprises the last data state which an application specific enclave sent to the operating system for storage in the persistent storage; and
wherein the master enclave of that respective platform further comprises a hash for said application specific enclave, wherein said hash was sent to it by said application specific enclave, wherein the hash is a value which represents a data state of said application specific enclave.

15. A tangible data carrier comprising program code arranged for causing a processor to carry out the method of any one of the claims 1 to 12 when said processor executes said program code.
